Europäisches Patentamt

European Patent Office

Office européen des brevets

(19)

(11) Veröffentlichungsnummer : **0 002 655**
**B2**

(12)     NEUE EUROPÄISCHE PATENTSCHRIFT

(45) Veröffentlichungstag der neuen Patentschrift :
18.06.86

(51) Int. Cl.4 : **B 29 D 11/00, G 02 C 7/04**

(21) Anmeldenummer : 78100646.5

(22) Anmeldetag : 11.08.78

(54) **Verfahren zur Oberflächenbehandlung einer Kontaktlinse.**

(30) Priorität : 16.12.77 DE 2756114

(43) Veröffentlichungstag der Anmeldung :
11.07.79 Patentblatt 79/14

(45) Bekanntmachung des Hinweises auf die Patenterteilung : 20.01.82 Patentblatt 82/03

(45) Bekanntmachung des Hinweises auf die Entscheidung über den Einspruch : 18.06.86 Patentblatt 86/25

(84) Benannte Vertragsstaaten :
**BE CH DE FR GB LU NL SE**

(56) Entgegenhaltungen :
**CA-A- 846 143**
**CH-B- 495 459**
**DE-A- 2 151 702**
**DE-A- 2 417 660**
**DE-A- 2 748 568**
**DE-B- 2 165 805**
**DE-B- 2 353 495**
**DE-B- 2 363 627**
**DE-C- 1 255 950**
**FR-A- 2 111 969**
**GB-A- 1 362 939**
**US-A- 3 542 461**
**US-A- 3 677 877**
**Adapptes, Firmenbroschüre der Firma Alcan bp Kreiner "Die Kontaktlinse"**
**H.V. Boenig, Structure and Properties of Polymers, G Thieme Publishers Stuttgart 1973, Structure and Radiation, p. 243-256**
**"Surface Treatment of polymer materials and solid materials "in" Kogakuno Ryoiki, Sondernummer 111**

(73) Patentinhaber : **Titmus Eurocon Kontaktlinsen GmbH & Co. KG**
**Goldbacher Strasse 57**
**D-8750 Aschaffenburg (DE)**

(72) Erfinder : **Höfer, Peter**
**Karlsbader Strasse 50**
**D-8750 Aschaffenburg (DE)**
Erfinder : **Kohl, Wolfgang**
**Bergstrasse 6**
**D-8752 Kleinwallstadt (DE)**

(74) Vertreter : **Nöth, Heinz, Dipl.-Phys. et al**
**Patentanwalt Müllerstrasse 1**
**D-8000 München 5 (DE)**

**Beschreibung**

Die Erfindung bezieht sich auf ein Verfahren gemäß dem Oberbegriff von Patentanspruch 1.

Bei harten Kontaktlinsen aus Polymethyl-methacrylat-Homopolymer oder Cel-luloseacetobutyrat-Homopolymer und auch bei weichen Kontaktlinsen aus hydrophilem Material, beispielsweise Polyhema (Polyhydroxyäthylmethacrylat), das dehydratisiert hart ist, kommt es während des Tragens der Kontaktlinsen zu Ablagerungen von Verunreinigungen auf den Oberflächen der Kontaktlinse. Diese Verunreinigungen, die aus anorganischen und organischen Stoffen, insbesondere Proteinen und Lipiden, bestehen, beeinträchtigen die Sicht und verringern bei weichen Kontaktlinsen die Gasdurchlässigkeit, was wiederum die Zeitdauer verringert, während der die Kontaktlinse beschwerdefrei getragen werden kann.

Die Stärke der Ablagerungen hängt im wesentlichen von der Talgproduktion des Auges des Trägers der Kontaktlinsen ab. Da es bisher nicht möglich ist, bei den genannten Kontaktlinsen der Ablagerung von Verunreinigungen vorzubeugen, muß der Kontaktlinsenträger die durch Ablagerungen verunreinigten Kontaktlinsen herausnehmen und mit geeigneten Linsenreinigungsmitteln reinigen, was für den Kontaktlinsenträger zumindest lästig ist.

Der Erfindung liegt die Aufgabe zugrunde, ein Verfahren gemäß dem Oberbegriff von Patentanspruch 1 zu schaffen, das zu Kontaktlinsenoberflächen führt, an denen sich Verunreinigungen, insbesondere Proteine und Lipide, in geringerem Maß ablagern.

Diese Aufgabe wird erfindungsgemäß dadurch gelöst, daß die Kontaktlinse nach dem Polieren einer Gasentladung in einer reinen Sauerstoffatmosphäre ausgesetzt wird.

Es hat sich gezeigt, daß die Behandlung der Kontaktlinse im Sauerstoffplasma zu verringerter Ablagerung von Verunreinigungen führt. Dies ist um so überraschender, als angenommen werden mußte, daß die Behandlung von Kontaktlinsenoberflächen durch eine Gasentladung, die an sich bei Kontaktlinsen aus PMMA zur Verbesserung der Benetzbarkeit bekannt ist (DE-C-1255950) und im bekannten Fall beispielsweise in Wasserdampf oder Wasserstoffperoxid erfolgt, parallel zur stärkeren Hydrophilie auch stärkere Adsorption von Verunreinigungen hervorruft. Die Gründe für die überraschende Verringerung der Adsorption durch Sauerstoffplasmabehandlung von harten und hydrophilen weichen Kontaktlinsen sind bisher nicht eindeutig geklärt.

In der Veröffentlichung FR-A-2111959 wird ein Verfahren zur Behandlung der Oberfläche von Silikonkautschukkörpern beschrieben, bei dem die Körper kurzzeitig einem kalten Inertgasplasma ausgesetzt werden und dann während zumindest vier Stunden unter Umgebungsbedingungen gehalten werden. Danach sollen sie überraschenderweise weniger zur Verschmutzung neigen; wichtig hierfür ist besonders die Einwirkung der Umgebungsbedingungen, da die Plasmabehandlung allein die gewünschte Wirkung nicht hat.

Vorzugsweise erfolgt die Oberflächenbehandlung der Kontaktlinse in der Sauerstoffatmosphäre durch eine Gleichstromentladung. Dazu wird die Kontaktlinse in einen Behälter eingebracht, der evakuiert wird, mit Sauerstoff durchflutet wird und dann auf einen Druck von vorzugsweise gleich oder kleiner 10 Torr eingestellt wird, bevor die Gasentladung eingeleitet wird. Besonders günstig ist ein Druck von 0,01 Torr. Während der Gasentladung liegt der Strom vorzugsweise im Bereich von 10 bis 100 mA und die Spannung vorzugsweise im Bereich von 200 bis 1000 V.

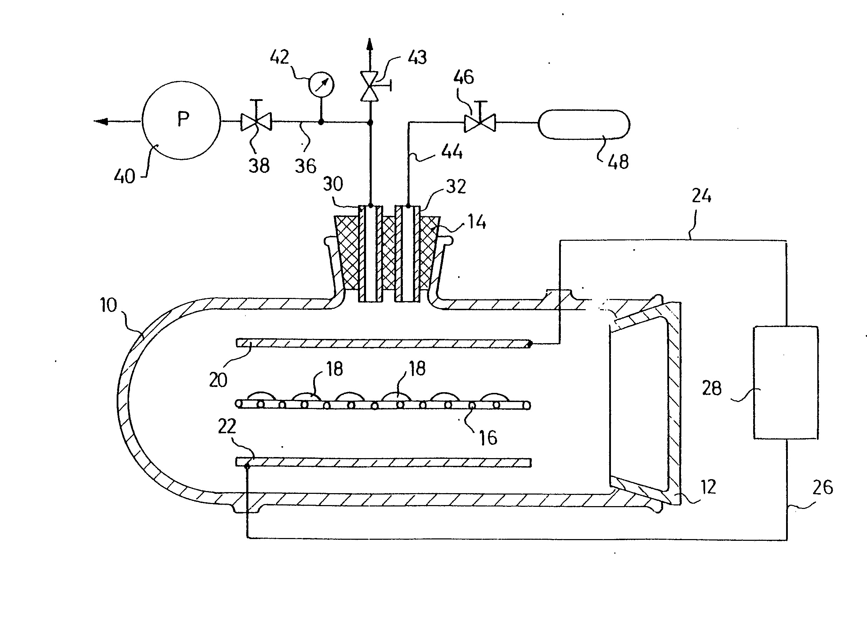

Ein Ausführungsbeispiel der Erfindung wird im folgenden unter Bezugnahme auf die einzige Figur erläutert, die schematisch und teilweise in Schnittdarstellung eine Vorrichtung zur Durchführung des Verfahrens zeigt.

Die dargestellte Vorrichtung umfaßt einen Behälter 10 aus Glas, der durch einen Verschlußdeckel 12 und einen Stopfen 14 gasdicht abschließbar ist. Innerhalb des Behälters ist ein als Glasgitter ausgebildeter Objektträger 16 angeordnet, auf dem die zu behandelnden Kontaktlinsen 18 liegen. Ferner befinden sich innerhalb des Behälters 10 zwei vorzugsweise als Platten ausgebildete Elektroden 20 und 22, die oberhalb bzw. underhalb des Objektträgers angeordnet sind und sich zumindest über dessen Länge erstrecken. Die Halterungen für den Objektträger und die Elektroden sind nicht dargestellt.

Jede Elektrode 20 bzw. 22 ist über einen durch die Wand des Behälters geführten Leiter 24 bzw. 26 mit einer Spannungsquelle 28 verbunden, mittels der an die Elektroden eine steuerbare Spannung angelegt werden kann.

Durch den Stopfen 14 führen ein erstes Anschlußrohr 30 und ein zweites Anschlußrohr 32. Das erste Anschlußrohr 30 ist über eine Leitung 36 mit einem Absperrventil 38 an eine Vakuumpumpe 40 angeschlossen. Der Druck im Inneren des Behälters 10 kann mittels eines an die Leitung 36 angeschlossenen Vakuummeters 42 gemessen werden. An die Leitung 36 ist ferner ein Belüftungsventil 43 angeschlossen. Das zweite Anschlußrohr 32 ist über eine Leitung 44 mit einem Absperrventil 46 an eine Sauerstoffquelle 48 angeschlossen.

Nach der Formgebung der Kontaktlinsen 18 und nachdem sie abschließend poliert worden sind, werden die Kontaktlinsen 18 auf den Objektträger 16 gelegt und in den Behälter 10 eingeführt. Nachdem der Behälter 10 mittels des Verschlußdeckels 12 geschlossen worden ist, wird bei geöffnetem Absperrventil 38 und ges-chlossenem Absperrventil 46 und Belüftungsven-til 43 der Behälter 10 mittels der Vakuumpumpe 40 evakuiert. Danach wird das Absperrventil 38 geschlossen und das Absperrventil 46 geöffnet, so daß Sauerstoff aus der Sauerstoffquelle 48 in den Behälter 10 strömt. Nach erneutem Umschalten beider Absperrventile wird dann der Druck der Sauerstoffatmosphäre im Behälter 10 mittels der Vakuumpumpe 40 auf einen geeigneten Wert gleich oder kleiner 10 Torr gesenkt. Sobald das gewünschte Vakuum erreicht ist, wird auch das Absperrventil 38 geschlossen und die Vakuumpumpe 40 abgeschaltet. Mittels der Spannungsquelle 28 wird dann an die Elektroden 20 und 22 eine zur Glimmentladung ausreichende Spannung angelegt, so daß die Gasfüllung im Behälter ionisiert wird und die Oberflächen der Kontaktlinsen 18 dem Ionen- und Elektronenstrom zwischen den Elektroden ausgesetzt sind. Diese Plasmabehandlung bewirkt außer der Bildung von die Hydrophilie erhöhenden polaren OH-Gruppen im Oberflächenbereich der Kontaktlinsen auch die überraschende Verringerung der Affinität für Verunreinigungen, insbesondere Lipide und Proteine. Nach Beendigung der Plasmabehandlung wird der Behälter 10 über das Belüftungsventil 43 belüftet, wonach die Kontaktlinsen aus dem Behälter entnommen werden.

Der gewünschte Effekt tritt bereits bei kurzzeitiger Plasmabehandlung der Kontaktlinsen auf. Gute Ergebnisse werden bei einer Behandlungsdauer von 15 min bei einem Entladestrom von 30 mA, einer Entladespannung von 600 V und einem Vakuum von 0,5 Torr erzielt.

Die Möglichkeiten zur Durchführung des Verfahrens sind allerdings nicht auf die vorstehend genannten Werte und die vorstehend beschriebene Vorrichtung und ihre Funktionsweise beschränkt.

**Patentansprüche**

1. Verfahren zur Oberflächenbehandlung einer Kontaktlinse aus Polymethylmethacrylat-Homopolymer oder Celluloseacetobutyrat-Homopolymer oder dehydratisiertem hydrophilem Kunststoff, die nach der Formgebung poliert wird, dadurch gekennzeichnet, daß die Kontaktlinse nach dem Polieren einer Gasentladung in einer reinen Sauerstoffatmosphäre ausgesetzt wird.

2. Verfahren nach Anspruch 1, dadurch gekennzeichnet, daß die Gasentladung unter Gleichstrom erfolgt.

3. Verfahren nach Anspruch 1, dadurch gekennzeichnet, daß die Gasentladung im elektromagnetischen Wechselfeld erfolgt.

4. Verfahren nach einem der Ansprüche 1 bis 3, dadurch gekennzeichnet, daß die Kontaktlinse in einen Behälter eingebracht wird, daß der Behälter evakuiert wird, danach mit Sauerstoff durchflutet und dann auf ein Vakuum von gleich oder kleiner 10 Torr evakuiert wird, bevor die Gasentladung eingeleitet wird.

5. Verfahren nach Anspruch 4, dadurch gekennzeichnet, daß die Sauerstoffatmosphäre während der Gasentladung einen Druck von 0,01 Torr hat.

6. Verfahren nach Anspruch 4 oder 5, dadurch gekennzeichnet, daß die Gasentladung bei einer Stromstärke im Bereich von 10 bis 100 mA und einer Spannung im Bereich von 200 bis 1000 V durchgeführt wird.

**Claims**

1. A process for the surface treatment of a contact lens of a homopolymer of polymethyl methacrylate or a homopolymer of cellulose acetate butyrate or dehydrated hydrophilic plastic which is polished after shaping, characterized in that after polishing the contact lens is subjected to a gas discharge in a pure oxygen atmosphere.

2. The process according to claim 1, wherein the gas discharge occurs with direct current.

3. The process according to claim 1, wherein the gas discharge occurs in an alternating electromagnetic field.

4. The process according to one of claims 1 to 3, wherein the contact lens is placed into a container, that said container is evacuated, then filled with oxygen and thereafter evacuated to a vacuum equal to or less than 10 torr prior to initiation of the gas discharge.

5. The process according to claim 4, wherein the oxygen atmosphere has a pressure of 0.01 torr during the gas discharge.

6. The process according to claim 4 or 5, wherein the gas discharge is executed with a current ranging from 10 to 100 mA and a voltage ranging from 200 to 1000 volts.

**Revendications**

1. Procédé pour le traitement de surface d'une lentille de contact en homopolymère de polyméthacrylate de méthyle ou homopolymère d'acétobutyrate de cellulose ou en matière synthétique hydrophile déshydratée, qui est polie après façonnage, caractérisé en ce que la lentille de contact est soumise après polissage à une décharge gazeuse dans une atmosphère d'oxygène pure.

2. Procédé suivant la revendication 1, caractérisé en ce que la décharge gazeuse a lieu sous courant continu.

3. Procédé suivant la revendication 1, caractérisé en ce que la décharge gazeuse a lieu dans un champ électromagnétique alternatif.

4. Procédé suivant l'une quelconque des revendications 1 à 3, caractérisé en ce que la lentille de contact est introduite dans un récipient, en ce que le récipient est mis sous vide, est ensuite balayé avec de l'oxygène et alors amené à un vide égal ou inférieur à 10 Torr, avant d'amorcer la décharge gazeuse.

5. Procédé suivant la revendication 4, caractérisé en ce que l'atmosphère d'oxygène pendant la décharge gazeuse a une pression de 0,01 Torr.

6. Procédé suivant la revendication 4 ou 5, caractérisé en ce que la décharge gazeuse est effectuée sous une intensité de courant dans la plage de 10 à 100 mA et une tension dans la plage de 200 à 1000 V.